Europäisches Patentamt

European Patent Office

Office européen des brevets

(19)

(11) Publication number: **0 224 038**
**A1**

(12) **EUROPEAN PATENT APPLICATION**

(21) Application number: **86114702.3**

(22) Date of filing: **23.10.86**

(51) Int. Cl.⁴: **A47J 36/36** , A47J 36/06

(30) Priority: **30.10.85 JP 243270/85**
**12.03.86 JP 35484/86**
**12.03.86 JP 35485/86**

(43) Date of publication of application:
**03.06.87 Bulletin 87/23**

(84) Designated Contracting States:
**DE FR GB**

(71) Applicant: **AUDIO-TECHNICA CORPORATION**
**2206 Naruse**
**Machida-shi Tokyo(JP)**

(72) Inventor: **Kobayashi, Hiroshi**
**15, Hanakoganei 3-chome**
**Kodaira-shi Tokyo(JP)**
Inventor: **Kobayashi, Masae**
**15, Hanakoganei 3-chome**
**Kodaira-shi Tokyo(JP)**
Inventor: **Teragaki, Takeshi**
**23-20-402, Yanokuchi 1-chome Ohta-ku**
**Tokyo(JP)**
Inventor: **Itaya, Hiromichi**
**14-8, Kyowa 1-chome**
**Sagamihara-shi Kanagawa-ken(JP)**

(74) Representative: **Haug, Dietmar et al**
**Patentanwälte Andrae, Flach, Haug, Kneissl**
**Steinstrasse 44**
**D-8000 München 80(DE)**

(54) Cooking pot of the energy-saving type.

(57) A cooking pot 10 of the energy-saving type includes a body 12 including an inner vessel portion 14 having an open upper end and being defined by a peripheral side wall 16 and a bottom wall 18 closing a lower end of the side wall 16, and an outer peripheral shell portion 20 having opposite open ends and being disposed around the side wall 16 of the inner vessel portion 14 to form an annular space 22 therebetween. The side wall 16 and the outer shell portion 20 are connected together only at their upper ends to close an upper end of the annular space 22, so that the annular space has an open lower end. A lower end 26 of the outer shell portion 20 is disposed in a plane perpendicular to the axis of the side wall 16 and extends at least to a plane in which the underside of the bottom wall 18 lies. A lid 32 is provided for closing the upper end of the side wall 16 of the inner vessel portion 14.

## COOKING POT OF THE ENERGY-SAVING TYPE

BACKGROUND OF THE INVENTION

Field of the Invention

This invention relates generally to heating utensils for cooking purposes and more particularly to cooking pots of the energy-saving type for boiling food.

Prior Art

Generally, in boiling food in a cooking pot, the pot continues to be heated over the fire even after the contents of the pot become boiled so as to ensure that the food in the pot is sufficiently soft.

It has been found, however, that most foods do not need to be cooked at a temperature of 100°C. For example, potatoes and taros can be adequately boiled at temperatures of 80 to 90°C, and when meat is boiled or cooked at temperatures of not less than 80°C, the protein thereof is completely denatured. Thus, it has become clear that it is not necessary to continue to heat most of foods in the pot after the food reaches 100°C and begins to be boiled. Basically, in cooking foods, it is only necessary for most foods to be maintained at suitable temperatures, for example, of 80 to 90°C for a predetermined time period, for example, of 0.3 to 1 hour. Thus, generally, although energy need to be produced to initially heat the food in the pot up to a predetermined temperature, it is not necessary to continue to heat the food thereafter to maintain the boiling of the food.

A typical example of the conventional pots under consideration comprises a vessel or body with an open top, and a lid for covering the open top of the pot body. It has been desired to provide a cooking pot which can cook food with less energy.

SUMMARY OF THE INVENTION

It is therefore an object of this invention to provide a cooking pot of the energy-saving type capable of cooking food efficiently with less energy.

According to the present invention, there is provided a cooking pot of the energy-saving type comprising:

(a) a body comprising an inner vessel portion having an open upper end and defined by a peripheral side wall and a bottom wall closing a lower end of said side wall, and an outer peripheral shell portion having opposite open ends and disposed around said side wall of said inner vessel portion to form an annular space therebetween, said side wall having an axis therethrough, said side wall and said outer shell portion being connected together only at their upper ends to close an upper end of said annular space, so that said annular space has an open lower end, and a lower end of said outer shell being disposed in a plane perpendicular to the axis of said side wall and extending at least to a plane in which the underside of said bottom wall lies ; and

(b) a lid for closing the upper end of said side wall of said inner vessel.

BRIEF DESCRIPTION OF THE DRAWINGS

Fig. 1 is a partly cross-sectional side-elevational view of a cooking pot provided in accordance with the present invention;

Fig. 2 is a view similar to Fig. 1 but showing a modified cooking pot;

Fig. 3 is a view similar to Fig. 1 but showing another modified cooking pot;

Fig. 4 is a perspective view of an outer shell;

Figs. 5 and 6 are views similar to Fig. 1 but showing further modified cooking pots, respectively;

Figs. 7 to 10 are fragmentary cross-sectional views showing further modified cooking pots, respectively; and

Fig. 11 is a view similar to Fig. 1 but showing a further modified cooking pot.

DESCRIPTION OF THE PREFERRED EMBODIMENTS OF THE INVENTION

The invention will now be described with reference to the drawings in which like reference numerals denote corresponding parts in several views.

A cooking pot 10 of the energy-saving type comprises a body 12 made of metal, the body comprising an inner vessel or container portion 14 defined by a peripheral side wall 16 of a cylindrical shape and a flat bottom wall 18 of a circular shape closing a lower end of the side wall 16, and an outer peripheral shell portion 20 of a cylindrical shape disposed around the side wall 16 of the inner vessel portion 14 in coaxial thereto. The side wall 16 and the outer shell portion 20 are spaced from each other except for their upper ends where there are joined together, to thereby from an annular space 22 therebetween. A lower end portion of the outer shell portion 20 is slightly bent inwardly, and the outer shell portion 20 extends downwardly beyond the bottom wall 18 of the inner vessel, the lower end 26 of the outer shell portion 20 being disposed in a plane parallel to the bottom wall 18 and perpendicular to the axis X of the body 12 which is also the common axis of the coaxial side wall 16 and outer shell portion 20. A bottom space 27 is defined by the bottom wall 18 and the lower portion of the outer shell portion 20 extending downwardly beyond the bottom wall 18, and communicates with the annular space 22.

A pair of hand grips 28 are secured to the outer peripheral surface of the outer shell portion 20 adjacent to the upper end 24 of the body 12 in diametrically opposite relation. A row of apertures 30 of a small size are formed through the outer shell portion 20 adjacent to the upper end 24 of the body 12, the apertures 30 being disposed in a plane perpendicular to the axis X of the body 12 and spaced from one another at equal intervals. Thus, the annular space 22 is communicated with the ambient air through the bottom space 27 and also through the apertures 30.

A hollow lid 32 for closing the upper open end 24 of the body 12 comprises a frusto-conical upper wall 34, a flat bottom wall 36 of a circular shape, and a side wall 38 interconnecting the upper wall 34 and the bottom wall 36 at their peripheries so as to define a confined space or chamber 40 in which the air is filled. A grip 42 is secured to the upper wall 34.

Preferably, the vessel portion 14 is made of metal of a high thermal conductivity such as aluminum while the outer shell portion 20 is made of metal having a lower thermal conductivity and has a relatively high resistance to corrosion, such as stainless steel. In this case, the vessel portion 14 and the outer shell portion 20 is joined together at the upper end 24 of the body 12 by welding or brazing, or by an adhesive, or other suitable fastening means such as rivets. The pot body 12 may be made entirely of stainless steel or other suitable metals.

When the cooking pot 10 is placed on a kitchen gas heater of the conventional type and is heated over the fire for cooking food in the pot 10, the flame of the gas heater, even though a little too excessive or large, is prevented by the lower portion of the outer shell portion 20, which extends downwardly beyond the bottom wall 18 of the inner vessel portion 14, from being directed outwardly of the pot body 12, thereby enhancing the heating efficiency. At this time, the annular space 22 performs a function similar to that achieved by a chimney since the row of apertures 30 are formed through the upper end portion of the outer shell portion 20. Therefore, the flame and hot air are drawn into the annular space 22. The hot air thus introduced into the annular space 22 is distributed uniformly over the entire outer peripheral surface of the side wall 16 of the inner vessel portion 14, so that the thermal energy is efficiently transmitted to the food in the cooking pot 10.

When the contents of the pot 10 are boiled, the heating of the pot 10 by the heater is stopped. Then, the pot 10 is placed on a plate 44 of a heat-resistance material having a flat upper surface. As described, since the lower end 26 of the outer shell portion 20 is disposed in the plane perpendicular to the axis X of the pot body 12, the open lower end 26 is closed by the upper flat surface of the plate 44, so that the hot air in the annular space 22 and bottom space 27 is retained therein. Thus, despite the provision of the apertures 30 of a small size, the air stored in the spaces 22 and 27 hardly escapes therefrom. Due to small heat conductivity of the air stored in the spaces 22 and 27, the contents of the cooking pot 10 are maintained at elevated temperatures over a longer period of time even after the heating of the cooking pot 10 by the heater is stopped. Therefore, with this cooking pot 10, it is only necessary to raise the temperature of the contents of the pot 10 to a predetermined level during an initial stage of the cooking, thereby saving much energy.

As described above, the row of apertures 30 are provided for effectively directing the relatively large flames of the gas heater and the hot air toward the annular space 22, and in the case where the flames of the gas heater are relatively small or in the case where an electric heater is to be employed, the apertures 30 may be omitted. Also, a suitable thermal insulation material may be filled in the space 40 of the lid 32. Further, the outer shell portion 20 may be shorter, but the lower end 26 of the outer shell 20 must extend at least to a plane in which the underside of the bottom wall 18 of the inner vessel portion 14 lies.

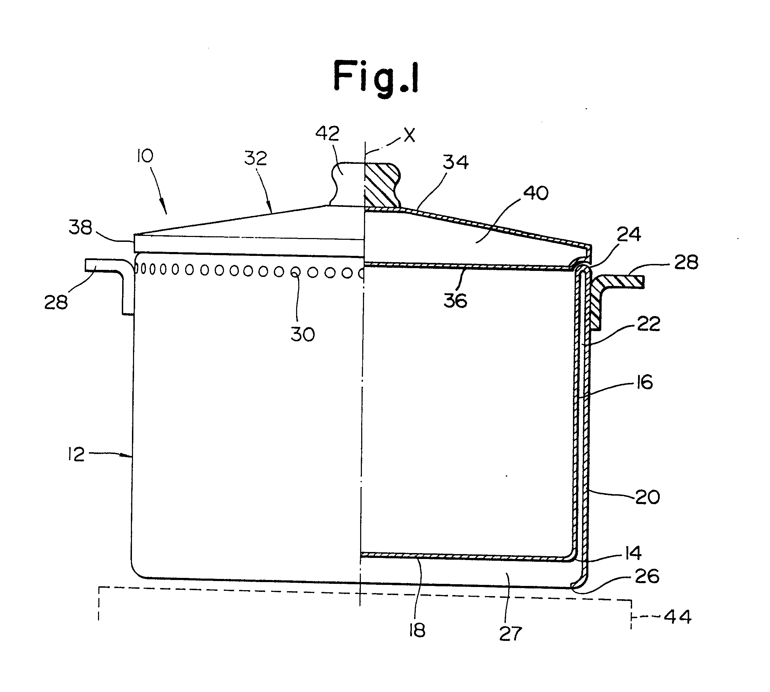

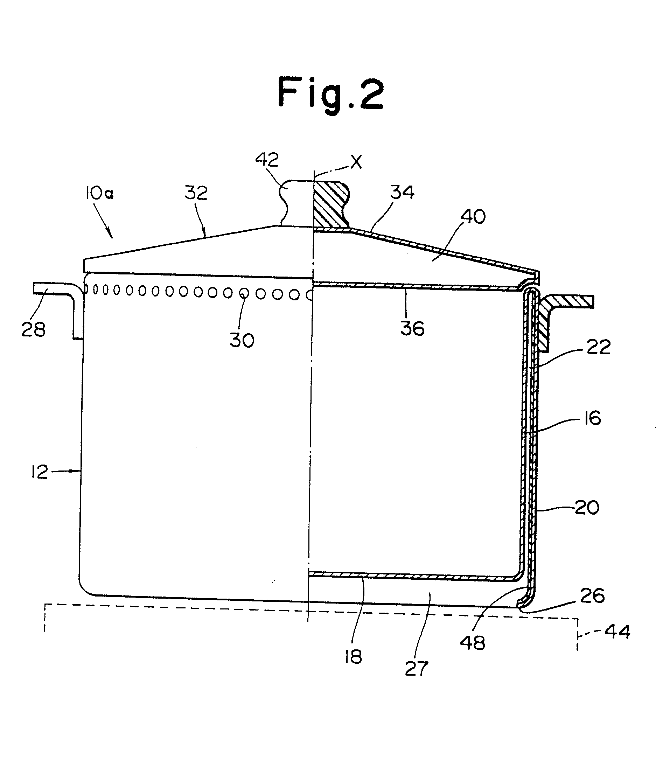

Fig. 2 shows a modified cooking pot 10a which differs from the cooking pot 10 of Fig. 1 only in that a thermal insulating sheet 48 is affixed to an entire inner surface of the outer shell portion 20. The thermal insulation sheet 48 prevents the inner surface of the outer shell portion 20 from being exposed to the fire of the heater, thereby preventing the overheating of the outer shell portion 20. This may prevent a cook from being subjected to a burn even if he inadvertently touches the outer shell 20. Also, the provision of the thermal insulation sheet 48 enhances a thermal insulation of the pot body 12.

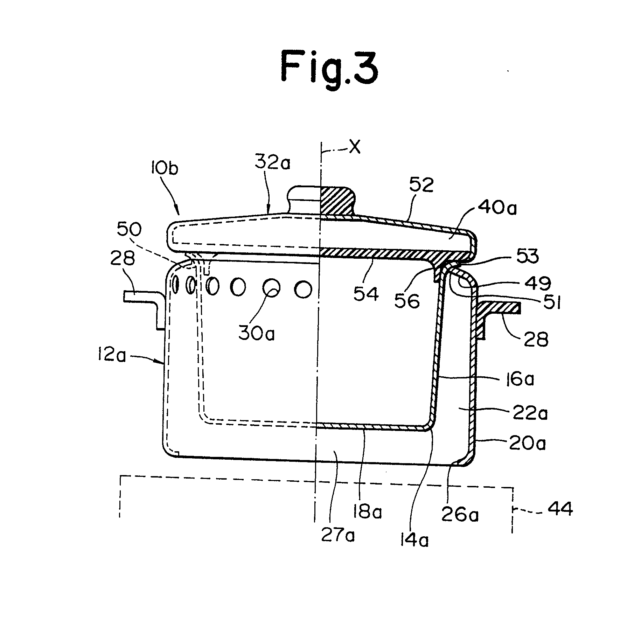

Fig. 3 shows another modified cooking pot 10b which differs from the cooking pot 10 of Fig. 1 mainly in that a pot body 12a is composed of two separate parts, that is to say, an inner vessel 14a and an outer shell 20a. More specifically, the pot body 12a comprises the inner vessel or container 14a defined by a peripheral side wall 16a of a tubular shape and a flat bottom wall 18a of a circular shape closing a lower end of the side wall 16a, and the outer shell 20a of a cylindrical shape disposed around the side wall 16a of the inner vessel 14a in coaxial relation thereto. The upper end of the outer shell 20a is bent inwardly to provide a peripheral flange 49 directed radially inwardly. The outer shell 20a is spaced from the inner vessel 14a except for its upper end 51 to thereby from an annular space 22a between the side wall 16a and the outer shell 20a. The inner vessel 14a and the outer shell 20a are made of metal. The lower end 26a is disposed in a plane parallel to the bottom wall 18a and perpendicular to the axis X of the body 12a, and apertures 30a are formed through the outer shell 20a, as described above for the preceding embodiments. The side wall 16a of the inner vessel 14a is decreasing in diameter progressively toward the bottom wall 18a, that is to say, tapering downwardly, and the upper end of the inner vessel 14a is directed radially outwardly to form a peripheral retainer flange 50.

The inner vessel 14a is removably fitted in the outer shell 20a, with the upper end 51 of the outer shell 20a held in engagement with the retainer flange 50 of the inner vessel 14a so as to close the upper end of the annular space 22a. Thus, the retainer flange 50 serves to limit a downward movement of the inner vessel 14a relative to the outer shell 20a. The body 12a thus assembled can be carried by gripping a pair of handgrips 28. It is preferred that a suitable fastening means (not shown) is provided for releasably locking the inner vessel 14a and the outer shell 20a together, so that the outer shell 20a is positively prevented from moved downwardly relative to the inner vessel 14a in case a trivet or pot holder of the gas heater is held against only the bottom wall 18a of the inner vessel 14a.

For assembling the inner vessel 14a and the outer shell 20a together, the inner vessel 14a is inserted into the outer shell 20a from the upper open end 51 until the retainer flange 50 of the inner vessel 14a is brought into engagement with the upper end 51 of the outer shell 20a.

A hollow lid 32a comprises an upper portion 52 of an inverted dish-shape and a bottom plate 54 of a circular shape secured to the upper portion 52 to define a space 40a. The upper portion 52 is made of metal while the bottom plate 54 is made of a heat resistant material such as a heat resistant plastics material and a heat resistant glass. The bottom plate 45 has an annular projection 56 formed integrally on the underside thereof, and when the upper open end 53 of the inner vessel 14a is closed by the lid 32a, the annular projection 56 is fitted in the upper open end 53 of the inner vessel 14a. Numeral 27a designates a bottom space.

Since the pot body 12a can be disassembled into the inner vessel 14a and the outer shell 20a, they can be easily washed and cleaned.

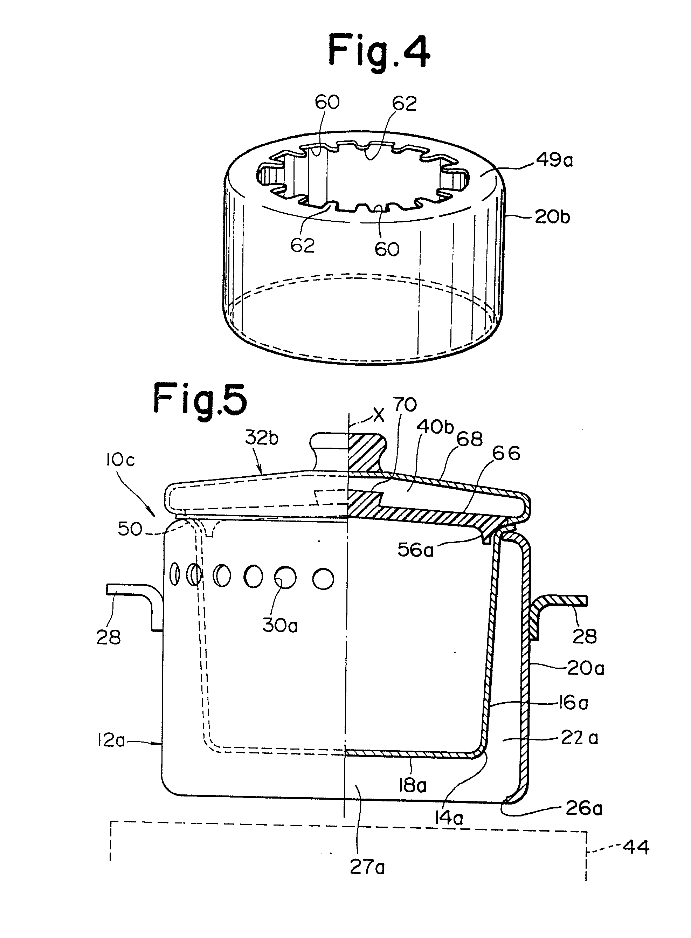

Fig. 4 shows a modified outer shell 20b which replaces the outer shell 20a of the cooking pot 10b of Fig. 3. The outer shell 20b differs from the outer shell 20a only in that a plurality of notches 60 are formed in a peripheral flange 49a to provide a plurality of projections 62 directed radially inwardly and spaced at equal intervals, and that the apertures 30a are omitted. When the inner vessel 14a is fitted in the outer shell 20b to assemble the pot body, only the projections 62 are held in engagement with the outer surface of the side wall 16a of the inner vessel 14a. Therefore, the area of contact of the outer shell 20b with the inner vessel 14a is substantially reduced, so that the transfer of heat from the inner vessel 14a to the outer shell 20a is reduced, thereby reducing a heat loss. In the assembled condition of the pot body, the notches 60 cooperate with the outer surface of the side wall 16a of the inner vessel 14a to form a plurality of apertures which replace the apertures 30a in the embodiment of Fig. 3.

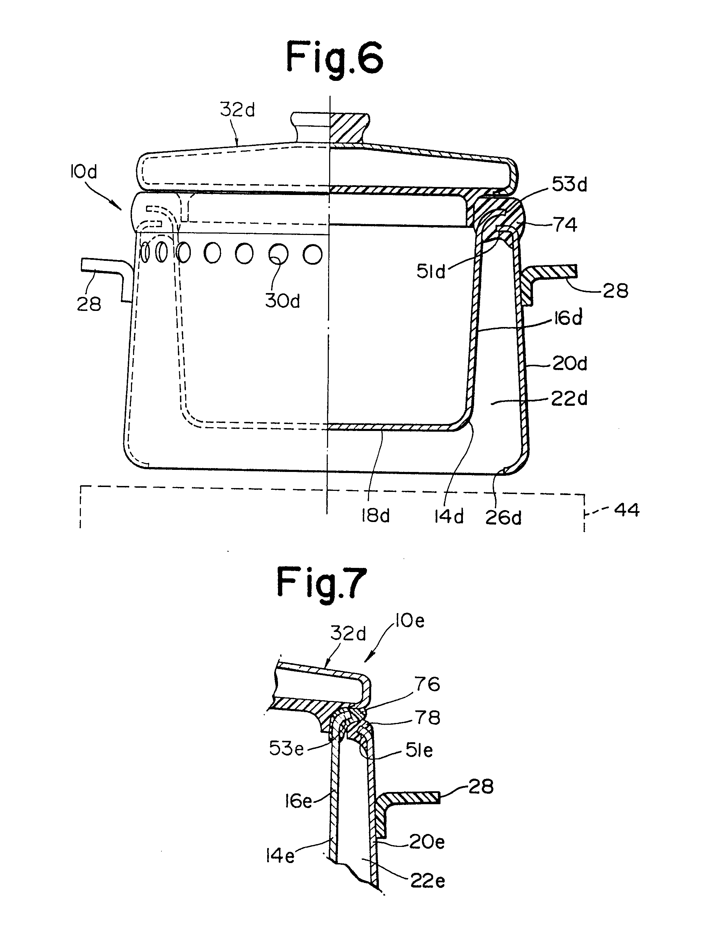

Fig. 5 shows a further modified cooking pot 10c which differs from the cooking pot 10b of Fig. 3 only in that a modified lid 32b is employed. The lid 32b comprises an inner lid member 66 of a disc-shape, and an outer lid member 68 of an inverted dish-shape adapted to rest on the flange 50 to cover the inner lid member 66. The inner lid member 66 has an annular projection 56a formed integrally on the lower surface thereof. The inner lid member 66 has a handgrip 70 and is made of a transparent heat-resistant material such as heat-resistant plastics materials or glass. The outer lid member 68 is made of metal. Since the inner lid member 66 is transparent, the interior of the inner vessel 14a can be safely inspected even during the cooking operation by removing the outer lid member 68. In the assembled condition of the lid 32b, a space 40b is defined by the inner and outer lid members 66 and 68, and this space enhance a thermal insulation of the lid 32b.

Fig. 6 is a further modified cooking pot 10d which differs from the cooking pot 10b of Fig. 3 mainly in that an inner vessel 14d and an outer shell 20d are connected together by a connective member 74 of a thermal insulation material. More specifically, the outer shell 20d is disposed around a peripheral side wall 16d of the inner vessel 14d in spaced relation thereto to form an annular space 22d therebetween. An upper end 51d of the outer shell 20d and an upper end 53d of the inner vessel 14d are embedded in the connective member 74 of an annular shape, so that the inner vessel 14d and the outer shell 20d are firmly interconnected by the connective member 74 to provide a unitary construction. The side wall 16d of the inner vessel 14d is slightly decreasing in diameter toward the bottom wall 18d. The outer shell 20d of a cylindrical shape is slightly increasing in diameter toward a lower end thereof. Each of the side wall 16d and the outer shell 20d may be of a uniform cross-section throughout the entire length thereof. Apertures 30d are formed through the outer shell 20d for purposes described above for the above embodiments. A lid 32d similar to the lid 32a in Fig. 3 is adapted to rest on the connective member 74 for closing the upper open end of the inner vessel 14d. The connective member 74 is made of a thermal insulation material having a heat resistance and a low thermal conductivity, such as a heat-resistant plastics material such as polytetrafluoroethylene or a heat-resistant foamed glass. Since the inner vessel 14d and the outer shell 20d are not connected together directly but are connected through the agency of the connective member 74 of a thermal insulation material. The transfer of heat from the inner vessel 14d to the outer shell 20d is prevented, thereby keeping the energy loss to a low level.

Fig. 7 shows a portion of a further modified cooking pot 10e which differs from the cooking pot 10d of Fig. 6 in that a first annular connective member 76 of a thermal insulation material is secured to an upper end 53e of an side wall 16e of ·an inner vessel 14e to cover it while a second annular connective member 78 of a thermal insulation material is secured to an upper end 51e of an outer shell 20e to cover it. The first and second connective members 76 and 78 are made of the same material as the connective member 74 of Fig. 6 and held together to close an upper end of an annular space 22e. Thus, in this embodiment, the inner vessel 14e and the outer shell 20e are separate from each other. For assembling the inner vessel 14e and the outer shell 20e together, the inner vessel 14e is introduced into the outer shell 20e until the first connective member 76 is brought into engagement with the second connective member 78.

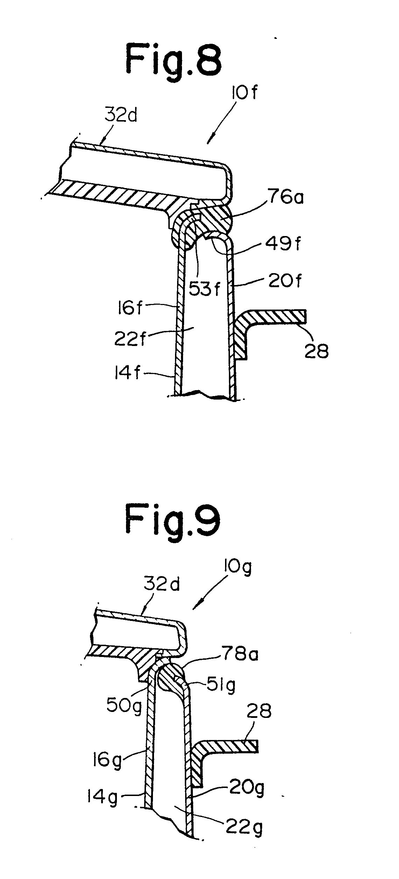

Fig. 8 shows a further modified cooking pot 10f which differs from the cooking pot 10e of Fig. 7 in that only a inner vessel 14f has an annular connective member 76a of a thermal insulation material secured to an upper end 53f of a side wall 16f. An upper end flange 49f of an outer shell 20f is adapted to be held against an underside of the connective member 76a in the assembled condition of the pot body so as to close an upper end of an annular space 22f.

Fig. 9 shows a further modified cooking pot 10g which differs from the cooking pot 10e of Fig. 7 in that only an outer shell 20g has an annular connective member 78a of a thermal insulation material secured to an upper end 51g thereof. An upper end flange 50f of a side wall 16g of an inner vessel 14g is adapted to be held against an upper surface of the connective member 78a in the assembled condition of the pot body so as to close an upper end of an annular space 22g.

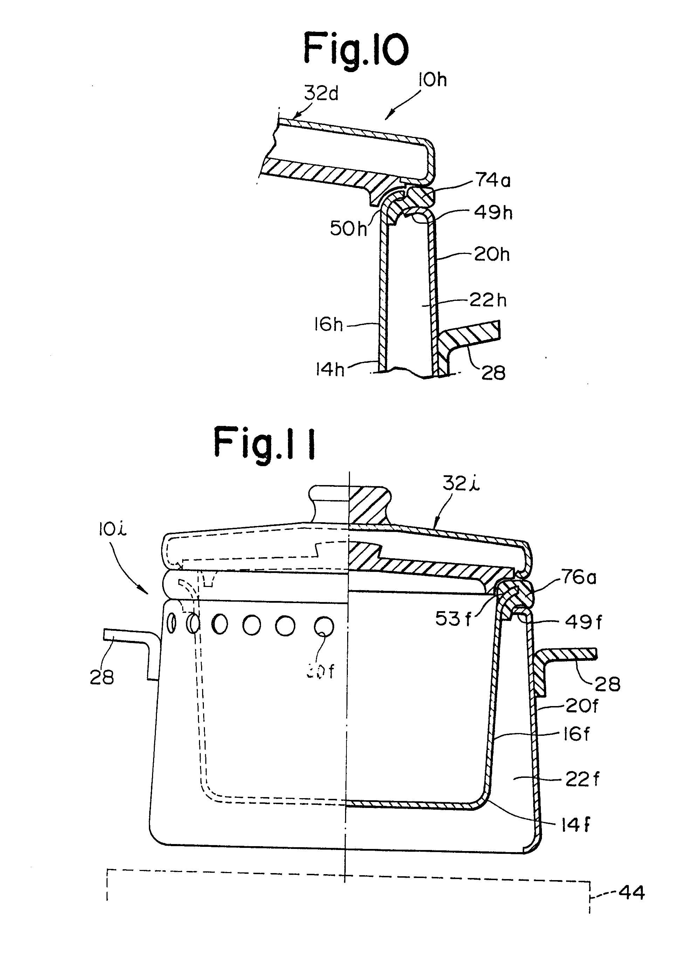

Fig. 10 shows a further modified cooking pot 10h which differs from the cooking pot 10e of Fig. 7 in that a separate annular connective member 74a of a thermal insulation material is interposed between upper end flanges 50h and 49h of inner vessel 14h and outer shell 20h so as to close an upper end of an annular space 22h. In this embodiment, the annular connective member 74a is merely sandwiched and held between the upper flanges 50h and 49h, and when the pot body is disassembled, the inner vessel 14h, the outer shell 20h and the connective member 74a are separated from one another. With this construction, when the connective member 74a becomes worn or damaged, it can be easily replaced by a new one.

Fig. 11 shows a further modified cooking pot 10i which differs from the cooking pot 10f of Fig. 8 in that a lid 32i similar to the lid 32b of Fig. 5 is employed. Numeral 30f designates apertures formed through the outer shell 20f.

## Claims

1. A cooking pot (10, 10a-i) of the energy-saving type comprising a body (12, 12a) having an upper open end (24), and a lid (32, 32a,b,d,i) for closing the upper end (24) of said body (12, 12a), characterized in that said body (12, 12a) comprises an inner vessel portion (14, 14a,d-h) having an open upper end and being defined by a peripheral side wall (16, 16a,d-h) and a bottom wall (18, 18a,d) closing a lower end of said side wall (16, 16a,d-h), and an outer peripheral shell portion (20, 20a,b,d-h) having opposite open ends (26, 26a,d; 51, 15d,e,g) and being disposed around said side wall (16, 16a,d-h) of said inner vessel portion (14, 14a,d-h) to form an annular space (22, 22a,d-h) therebetween, said side wall (16, 16a,d-h) having an axis therethrough, said side wall (16, 16a,d-h) and said outer shell portion (20, 20a,b,d-h) being connected together only at their upper ends (51, 51d,e,g; 53, 53d-h) to close an upper end of said annular space (22, 22a,d-h) so that said annular space (22, 22a,d-h) has an open lower end, and a lower end (26, 26a,d) of said outer shell portion - (20, 20a,b,d-h) being disposed in a plane perpendicular to the axis of said side wall (16, 16a,d-h) and extending at least to a plane in which the underside of said bottom wall (18, 18a, d) lies.

2. A cooking pot (10, 10a-i) according to claim 1, wherein the lower end (26, 26a,d) of said outer shell portion (20, 20a,b,d-h) extends downwardly beyond said bottom wall (18, 18a,d) of said inner vessel portion (14, l4a,d-h).

3. A cooking pot (10, 10a-d) according to claim 1 or 2, wherein a plurality of apertures (30, 30a,d,f) are formed through said outer shell portion (20, 20a,f) adjacent to the upper end (51, 51d) thereof and spaced from one another around the periphery of said outer shell portion (20, 20a,f).

4. A cooking pot (10, 10a) according to anyone of claims 1 to 3, wherein the upper end of said side wall (16) of said inner vessel portion (14) and the upper end of said outer shell portion (20) are directly connected together integrally to form a unitary construction.

5. A cooking pot (10, 10a,b,d-h) according to anyone of the preceding claims, wherein said lid - (32, 32a,d) comprises an upper wall (34, 52) and a lower wall, (36, 54) which cooperates with said upper wall (34, 52) to form a space (40, 40a) therebetween.

6. A cooking pot (10a) according to anyone of the preceding claims, wherein a thermal insulation sheet (48) is affixed to an entire inner surface of said outer shell portion (20).

7. A cooking pot (10b,c,e-i) according to anyone of claims 1 to 3 and 5 and 6, wherein said inner vessel portion (14a, 14e-h) and said outer shell portion (20a, 20e-h) are independent of each other, said inner vessel portion (14a, 14e-h) being removably fitted in said outer shell portion (20a, 20e-h), said side wall (16a, 16e-h) of said inner vessel portion (14a, 14e-h) having at its upper end (53, 53e-h) a first peripheral flange (50f-h) directed radially outwardly, said flange (50f-h) being engaged with the upper end (51, 51e, 51g) of said outer shell portion (20a, 20e-h) to limit a downward movement of said inner vessel portion (14a, 14e-h) relative to said outer shell portion (20a, 20e-h).

8. A cooking pot (10b) according to claim 7, wherein said outer shell portion (20b) has at its upper end a second peripheral flange (49a) directed radially inwardly, a plurality of notches (60) being formed in said second peripheral flange - (49a) and spaced therearound to provide a plurality of radially inwardly directed, spaced projections - (62), and said projections (62) being held against an outer surface of side wall (16a), so that said notches (60) cooperate with said outer surface of said side wall (16a) to define apertures.

9. A cooking pot (10d-i) according to anyone of claims 1 to 3 and 5 and 6 wherein said outer shell - (20d-h) is disposed around said inner vessel portion (14d-h) in sapced relation thereto, there being provided an annular connective member (74, 74a, 76, 76a, 78, 78a) of a thermal insulation material through which the upper end (53d-h) of said side wall (16d-h) of said inner vessel portion (14d-h) and the upper end (51d,e,g) of said outer shell portion - (20d-h) are connected.

10. A cooking pot (10f, 10i) according to claim 9, wherein said connective member (76a) is secured to the upper end (53f) of said side wall (16f) of said inner vessel portion (14f).

11. A cooking pot (10g) according to claim 9, wherein said connective member (78a) is secured to the upper end (51g) of said outer shell portion - (20g).

12. A cooking pot (10h) according to claim 9, wherein said connective member (74a) is releasably held between the upper end of said side wall - (16h) and the upper end of said outer shell portion (20h).

13. A cooking pot (10e) according to anyone of claims 1 to 3 and 5 and 6, wherein said outer shell portion (20e) is disposed around said inner vessel portion (14e) in spaced relation thereto, there being provided a pair of first and second annular connective members (76, 78) of a thermal insulation material secured respectively to the upper end (53e) of said side wall (16e) of said inner vessel portion - (14e) and the upper end (51e) of said outer shell portion (20e), said first and second connective members (76, 78) being held against each other.

14. A cooking pot (10c, 10i) according to anyone of claims 1 to 4 and 6 to 13, wherein said lid (32b, 32i) comprises an inner lid member (66) of a generally disk-shape for closing the upper end - (53f) of said side wall (16a), and an outer lid member (68) of a generally inverted dish-shape for being placed on said inner lid member (66) for forming a space (40b) therebetween, said inner lid member (66) being transparent.

# Fig.I

# Fig.2

# Fig.3

# Fig.4

60   62

49a

20b

62   60

# Fig.5

10c

32b   X   70   40b   68   66

50

56a

28   30a   28

20a

16a

12a   22a

18a

14a   26a

27a

44

# Fig.6

# Fig.7

# Fig.8

# Fig.9

0 224 038

# Fig.10

# Fig.11

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-1 032 837 (RIGAL) <br><br> * Whole document * <br><br> --- | 1-3,6,7 | A 47 J 36/36 <br> A 47 J 36/06 |
| X | US-A-4 296 728 (HOFSTETTER) <br><br> * Figures 1,7 * <br><br> --- | 1,2,4,8 | |
| X | US-A-2 176 400 (HAMBLET) <br> * Figure 1 * <br><br> --- | 1-4 | |
| X | CH-A- 88 347 (DELISLE) <br> * Figures 1,2 * <br><br> --- | 1,5,7 | |
| X | US-A-2 282 400 (GINNEL) <br><br> * Figures 2,5 * <br><br> ----- | 1-3,7,8 | TECHNICAL FIELDS SEARCHED (Int. Cl.4) <br><br> A 47 J |

The present search report has been drawn up for all claims

| Place of search | Date of completion of the search | Examiner |
|---|---|---|
| THE HAGUE | 30-01-1987 | SCHARTZ J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82